# EUROPÄISCHE PATENTSCHRIFT

(11) **EP 1 957 428 B1**
(45) Veröffentlichungstag und Bekanntmachung des Hinweises auf die Patenterteilung: **11.03.2009**
(21) Anmeldenummer: 06818028.0
(22) Anmeldetag: 27.10.2006
(51) Int. Cl.: C04B 35/44, C04B 40/02, F16L 59/00, C01F 7/02

(54) **HOCHTEMPERATURFESTER ALUMINAT-WÄRMEDÄMMSTOFF**
HIGH-TEMPERATURE RESISTANT, ALUMINATE-BASED THERMAL INSULATION MATERIAL
ISOLANT THERMIQUE A BASE D'ALUMINATES RESISTANT A DES TEMPERATURES ELEVEES

(30) Priorität: 31.10.2005 DE 102005052380
(43) Veröffentlichungstag der Anmeldung: 20.08.2008
(73) Patentinhaber: Calsitherm Silikatbaustoffe GmbH, 33175 Bad Lippspringe (DE)
(72) Erfinder: HÖLSCHER, Klaus, 33175 Bad Lippspringe (DE); HÖLSCHER, Tobias, 33175 Bad Lippspringe (DE)
(74) Vertreter: Walther, Robert
(86) Internationale Anmeldenummer: PCT/DE2006/001903
(87) Internationale Veröffentlichungsnummer: WO 2007/051449

(56) Entgegenhaltungen:
- EP-A1- 0 628 523
- EP-A1- 0 634 377
- DE-A1- 2 600 510

## Beschreibung

Die Erfindung betrifft einen Wärmedämmstoff aus Aluminaten mit hoher Temperatur- und Alkalibeständigkeit sowie Formkörper daraus und ein Herstellverfahren desselben.

Ein derartiger Aluminat-Wämedämmstoff ist unter der Marke Calutherm^{®} bekannt und ist ein poröses Calcium-Aluminat, das insbesondere in Form von Formteilen, wie Rinnen, Rohren und Ringen, der Leitung von NE-Metallschmelzen dient. Die Herstellung der porösen Formteile erfolgt durch eine Autoklavierung einer Aufschlämmung aus entsprechenden Oxiden, Hydroxiden o. dgl. und anschließende Trocknung. Derartige Materialien können nur bis 1100 °C eingesetzt werden und haben eine geringe Beständigkeit gegen solche alkalihaltigen Verbrennungsgase, die in Feuerungsanlagen, insbesondere bei einer Abfallverbrennung oder Zementherstellung, anfallen.

Für die Ausrüstung von Abfallverbrennungs- oder Zementherstellungsanlagen, in denen Temperaturen über 1300 °C auftreten, werden insbesondere Schamotte und Calciumsilikatmaterialien verwandt, die ebenfalls durch Alkalien, insbesondere in den heißen Verbrennungsgasen, angegriffen werden, so dass sie aufblühen, einreißen und abblättern, wobei sich Alkalialuminum- und Alkalisilikate als Zersetzungsprodukte bilden.

Weiterhin sind aus der Literatur, insbesondere aus der DE 20 55 024 A1 und JP 020 18 350 A2, verschiedene Verfahren zur Herstellung von Alkalialuminaten, insbesondere Natrium-Aluminat bekannt, das wegen seiner Ionenleitfähigkeit als Batterie- und Akkumulatorwerkstoff genutzt wird. Die Herstellungsverfahren beruhen auf einer Homogenisierung einer Mischung der Oxide oder Hydroxide der Ausgangsstoffe vorzugsweise in stöchiometrischer Mischung und einer Sinterung bei Temperaturen bis 1600°C oder mehr. Dabei entsteht ein sehr dichtes Sintermaterial -die Dichte beträgt etwa 3,2 g/cm³- indem die Ausgangsmischung von Natrium- und Aluminiumausgangsstoffen zahlreiche Zwischenstufen durchläuft und in verschiedenen Formen und Übergangsstufen, auftritt. Störungen treten dabei u.U. durch die Bildung von m-Al₂O₃ oder NaAlO₂ Kristallkeimen auf, die später, insbesondere bei Temperaturwechselbelastungen zu fortschreitenden Rissen im Sinterkörper und bei Belastung zum Zerfall führen. Insbesondere eine Wanderung der Natriumionen aus dem Inneren in die Randzone führt zu einem Konzentrationsgefälle und damit zu einer ungleichen Kristallbildung und Phasenausbildung im Sinterkörper.

Es ist Aufgabe der Erfindung, einen hochtemperaturbeständigen- und festen hochporösen Wärmedämmstoff zu schaffen, der gegen Alkalien, insbesondere in Verbrennungsgasen, beständig ist, sowie ein einfaches Herstellverfahren und damit hergestellte Platten und Formteile zu schaffen.

Die Lösung besteht darin, dass der Wärmedämmstoff aus hochporösem Alkali-β-Aluminat oder einer entsprechenden Vorstufe desselben besteht.

Die Lösung zur Verfahrensaufgabe besteht darin, dass eine Mischung aus Aluminiumoxiden, -hydroxid- und/oder thermisch zersetzbaren Aluminium-Salzen und Alkalioxiden, -hydroxiden und/oder thermisch zersetzbaren Alkalisalzen mit Wasser und einem Stabilisator und Verstärkungsstoff gemischt und ausgeformt und anschließend mit Sattdampfdruck autoklaviert wird, die so verfestigten Formkörper getrocknet werden und dann in situ oder in einer Sinterkammer mit Temperaturen bis zu 1600 °C gebrannt werden.

Der neuartige Wärmedämmstoff vereinigt die Widerstandsfähigkeit von Alkalialuminat gegen Alkalidämpfe- und -schmelzen mit einer geringen Wärmeleitfähigkeit aufgrund der Porenstruktur, die durch die Naßaufbereitung der Ausgangsstoffe mit einem hohen, stabilisierten Wasseranteil im Autoklaven entsteht.

Zudem erbringt die Porenstruktur den großen Vorteil, dass Kristallkeime und Phasengrenzen stets nur eine kurze Wachstumsstrecke verfügbar haben, so dass sich bei Temperaturwechselbelastungen keine tiefen Risse oder Spalten bilden können.

Das bei hohen Sintertemperaturen im Bereich zwischen 1000- 1600 °C entstehende Alkali-β-Aluminat stellt ein gegen die Einwirkung von heißen Alkalidämpfen widerstandsfähiges unveränderbares Endprodukt dar.

Es wurden an Mustern nach einem Brand Rohdichten von ca. 0,5 g/cm³ und eine Wärmeleitfähigkeit von ca. 0,3 W/(mK) gemessen. Die mittlere Porengröße beträgt ca. 0,35 µm.
Bei weiteren Versuchen ergab sich je nach Ausgangsmischung eine Rohdichte bis 1,30 g/cm³ und eine Wärmeleitfähigkeit bis 0,9 W/(mK) und Porengrößen bis 1,0 µm.

Eine Schwindung von 2 % ergab sich je nach der Zusammensetzung der Ausgangsstoffe bei einer Sintertemperatur zwischen 1350 und 1450 °C, wenn sie nach der Abkühlung gemessen wurde. Dadurch ergibt sich die Möglichkeit, die vorgefertigten Formkörper, wie Platten, Formsteine, Rohre, Ringe usw., unmittelbar ohne einen aufwendigen Brand zur Auskleidung von Feuerungskammern und Rauchzügen zu verwenden.

Als Tonerde-Rohstoff sind insbesondere Aluminiumhydroxid, genannt Gibbsit, und Böhmit AlO(OH) in verschiedenen Korngrößen geeignet.

Als Alkali-Rohstoff sind insbesondere Natrium- und Kaliumhydroxid sowie Alkalikarbonat, -nitrat, -acetat, -salicylat oder -formiat oder ein anderes Hydroxikarbonsäuresalz einzusetzen, wobei letztere bei Temperaturen zwischen 200 und 500 °C in Karbonate übergehen, die bei noch höheren Temperaturen zerfallen, so dass das entstehende Alkalioxid sich mit dem Aluminiumoxid verbindet. Ebenso kann das Aluminium aus einem sich bei erhöhter Temperatur zersetzendem Salz einer entsprechenden Säure stammen.

Als Stabilisierungs- und Filtrationshilfsmittel eignet sich Methylcellulose, in einer Konzentration zwischen 0,5 und 1,5 % und/oder Zellstoff in einer Konzentration zwischen 1 und 8 %.

Der Mischungsansatz wird vorzugsweise mit einem Überschuß von Alkalioxid zum Aluminiumoxid bezogen auf deren Verhältnis im Endprodukt hergestellt.

Für ein Beispiel mit Natriumoxid zu Aluminiumoxid wird der Herstellprozeß mit einem Verhältnis Natriumoxid zu Aluminiumoxid von 1:4,2 begonnen, das sich über 1: 5...6 für β₃-Tonerde und für NaAlO₂ immer weiter auf den Wert 1:7...9 des Na₂O-11Al₂O₃ der β₂-Tonerde bei 1500 °C hin erhöht. Dabei fällt die Alkalioxidkonzentration im Wärmedämmstoff durch eine entsprechende Auswanderung.

Die angesetzte und gerührte Mischung wird in einer gewünschten Form oder als Preßling bei etwa 200 °C für etwa 5 bis 24 h autoklaviert. Nach leichtem Abkühlen und Vortrocknen bei 160 °C wird der Körper bei 160 °C bis zur Massenkonstanz nachgetrocknet.

Die Druckfestigkeit des getrockneten Körpers liegt über 10 N/mm², so dass er ohne weiteres in diesem Zustand verarbeitbar und in eine Feuerungsanlage einbaubar ist.

Andernfalls erbringt ein Brand bei 1000 °C für 12 h eine Verminderung der Druckfestigkeit auf 6,3 N/mm² und bei 1200 °C für 12 h auf etwa 4,5 N/mm². Dabei fällt die Rohdichte von ca. 0,65 auf 0,55 bzw. 0,50 g/cm³ und das ursprünglich im Röntgendiffraktogramm erscheinende Böhmit ist zu Natriumaluminat umgewandelt.

Bei einem Korrosionstest nach der Tiegelmethode nach DIN 51069 mit 40 g einer der aggressivsten Salzmischungen aus K₂SO₄ und K₂CO₃ im massenbezogenen Verhältnis 1:1 bei 1100 °C für 5 h zeigt sich nach der Abkühlung keine Korrosion.

Im autoklavierten ungebrannten Zustand zeigen sich im Rasterelektronenmikroskop Agglomerate aus gut ausgebildeten Plättchenförmigen Kristallen. Die Agglomerate haben Abmessungen von 10-20 µm und die Kristalle von 1-3 µm. Natriumhydroxid ist nicht zu sehen.

Nach dem Brand bei 1200 °C/12h zeigt sich ein ähnliches Gefüge wie vor, jedoch sind typische β-Tonerdekristalle mit gezakten Rändern zu sehen.

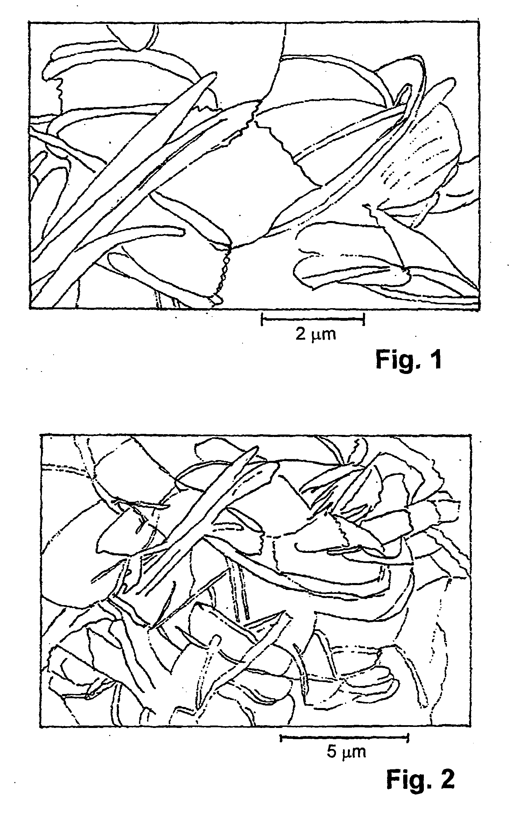

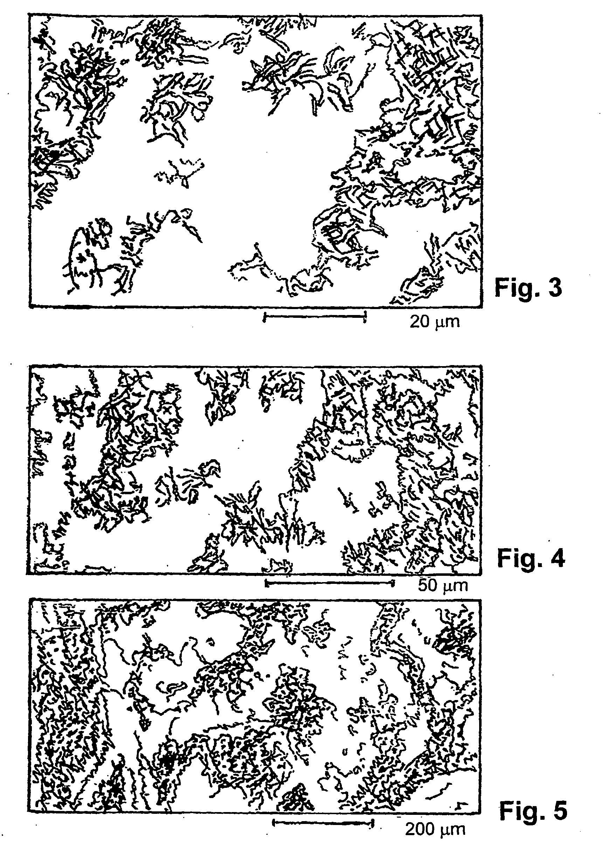

Die Fig. 1 bis 5 zeigen typische REM-Aufnahmen mit verschiedenen Maßstäben. Man erkennt die gewinkelten zueinander angeordneten Kristallblätter bei großer Vergrößerung. Die geringeren Vergrößerungen geben einen Überblick über die Agglomerate, die ketten- und ballenförmig die porösen Bereiche umlagern, die insbesondere durch das anfangs eingebrachte und so später ausgedampfte Prozeßwasser ausgebildet wurden, das etwa 50 Gew. % der Mischung ausmachte.

## Patentansprüche

1. Wärmedämmstoff aus porösen Aluminaten und einer Temperaturbeständigkeit bis über 1000 °C, **dadurch gekennzeichnet, dass** er aus Alkali-β-Aluminat und/oder einer autoklavierten Vorstufe desselben besteht, so dass er widerstandsfähig gegen Alkalidämpfe und -schmelzen ist, wobei seine Rohdichte 0,3 bis 1,30 g/cm³ beträgt, seine Wärmeleitfähigkeit zwischen 0,2 und 0,9 W/(mK) beträgt und seine Porengröße im Bereich von 0,1 bis 1,0 µm liegt.

2. Wärmedämmstoff nach Anspruch 1, **dadurch gekennzeichnet, dass** die Vorstufe aus Alkalialuminaten besteht.

3. Wärmedämmstoff nach Anspruch 2, **dadurch gekennzeichnet, dass** die Alkalialuminate aus Natrium- oder Kalium-Böhmit, -αAluminat, -βAluminat, -γAluminat, -ηAluminat, -Thodit und/oder -Spinell besteht.

4. Wärmedämmstoff nach Anspruch 3, **dadurch gekennzeichnet, dass** die Vorstufe Alkalioxid, -hydroxid, -salz einer bei Temperaturen bis unter 1000 °C flüchtigen Säure und/oder Aluminiumsalz einer bei Temperaturen unter 1000 °C flüchtigen Säure und/oder m-Al₂O₃ und/oder NaAlO₂ enthält.

5. Wärmedämmstoff nach Anspruch 4, **dadurch gekennzeichnet, dass** die flüchtige Säure Kohlensäure, Salpetersäure, Salicilsäure, Ameisensäure, Essigsäure oder eine andere Hydroxikarbonsäure ist.

6. Wärmedämmstoff nach einem der vorstehenden Ansprüche, **dadurch gekennzeichnet, dass** seine Festigkeit > 3 N/mm² beträgt.

7. Verwendung des Aluminat-Wärmedämmstoff nach einem der Ansprüche 1 bis 6 in Form einer Platte, eines Verbundsteines, eines Rohres oder Rohrsegments oder Ringes.

8. Verfahren zur Herstellung des Wärmedämmstoffes nach einem der Ansprüche 1 bis 6 oder eines Formteiles nach Anspruch 7, **dadurch gekennzeichnet, dass**
- zuerst eine homogene wässrige Mischung aus mindestens einem Alkaliionen freisetzenden ersten Stoff und mindestens einem Aluminiumionen freisetzenden zweiten Stoff mit etwa der gleichen Menge Wasser aufgeschlämmt wird, wobei die beiden Stoffe derart beschaffen sind, dass sie bei Temperaturen unter 1000 °C das jeweilige Alkali- oder Aluminiumoxid unter Verflüchtigung der übrigen Bestandteile freisetzen, wobei das rechnerische Verhältnis des in die Mischung eingebrachten Alkalioxids zum Aluminiumoxid etwa doppelt so groß wie das von Alkali-β-Aluminat ist;
- danach wird diese homogene Mischung als Suspension in einer Form oder gepresste Platte oder Formling bei etwa 200 °C für 5 bis 30 h autoklaviert oder diese Mischung wird als Suspension direkt autoklaviert, der Formgebung unterworfen und eventuell erneut autoklaviert;
- dann bei ca. 160 °C 10 bis 30 h vorgetrocknet,
- danach eventuell entformt und bei ca. 160 °C nachgetrocknet und
- gegebenenfalls in einem Brennofen 5 bis 15 h oder in situ bei einer Temperatur zwischen 800 °C und 1600 °C gebrannt.

9. Verfahren nach Anspruch 8, **dadurch gekennzeichnet, dass** als erster Stoff Natriumhydroxid, Kaliumhydroxid, Soda oder Pottasche eingesetzt wird.

10. Verfahren nach Anspruch 8 oder 9, **dadurch gekennzeichnet, dass** als zweiter Stoff Aluminiumtrihydroxid, genannt Gibbsit, und/oder Böhmit, Aluminiumoxidhydroxid, eingesetzt wird.

11. Verfahren nach einem der Ansprüche 8 bis 10, **dadurch gekennzeichnet, dass** der Mischung ein Stabilisierungsmittel in einer Konzentration zwischen 0,3 und 1,5 % und/oder ein Armierungs- und Filtrationshilfsmittel in einer Konzentration zwischen 1 und 8 % zugesetzt wird.

12. Verfahren nach Anspruch 11, **dadurch gekennzeichnet, dass** das Stabilisierungsmittel eine Methylzellulose und das Armierungs- und Filtrationshilfsmittel ein Zellstoff ist.

13. Verfahren nach einem der Ansprüche 8 bis 12, **dadurch gekennzeichnet, dass** die Mischung mit einem rechnerischen Verhältnis des in den beiden Stoffen enthaltenen Natriumoxids Na₂O, zum Aluminiumoxid, Al₂O₃, ca. 1:4,2 beträgt.

## Claims

1. Heat insulation material of porous aluminates and with a heat resistance to over 1000°C, **characterised in that** it consists of alkali-β-aluminate and/or an autoclaved pre-stage of the same, so that it is resistant against alkali steam and melting, whereby its raw density is 0,3 to 1,30 g/cm³, its heat conductivity is between 0,2 and 0,9 W/(mK) and its pore size is in the range from 0,1 to 1,0 µm.

2. Heat insulation material according to claim 1, **characterised in that** the pre-stage consists of alkali aluminates.

3. Heat insulation material according to claim 2, **characterised in that** the alkali aluminates consist of sodium ore potassium boehmite, -αaluminate, -βaluminate, -γaluminate, - ηaluminate, thodite and/or spinell.

4. Heat insulation material according to claim 3, **characterised in that** the pre-stage comprises alkalioxyd, -hydrooxyd, salt of an volatile acid at a temperature to under 1000°C and/or aluminium salt of volatile acid at a temperature under 1000°C and/or m-Al₂O₃ and/or NaAl₂.

5. Heat insulation material according to claim 4, **characterised in that** the volatile acid is carbonic acid, nitric acid, salicyl acid, formic acid, acetic acid or another hydroxide carbonic acid.

6. Heat insulation material according to one of the previous claims, **characterised in that** its strength is > 3 N/mm².

7. Use of the aluminate heat insulation material according to one of claims 1 to 6 in the shape of a sheet, a composite stone, a pipe or pipe segment or ring.

8. Method for producing the heat insulation material according to one of claims 1 to 6 or of a molded article according to claim 7, **characterised in that**
- first a homogeneous watery mixture of at least one alkali ions releasing first material and one at least aluminium ions releasing second material is suspended with approx. the same quantitiy of water, whereby both materials are such composed, that they release at temperatures under 1000°C the respective alkali- or aluminiumoxid under volatilising the remaining components, whereby the arithmetic ratio of alakalioxyd, that is filled in the mixture, to the aluminiumoxyd is approx. double of the amount of the used alkali-β-aluminat;
- after that, this homogenous mixture is autoclaved as suspension in a form or pressed board or formed part article at approx. 200°C for 5 to 30h or this mixture is directly autoclaved as suspension, is submitted to the forming process and is possibly autoclaved once more;
- then, pre-dried at approx. 160°C 10 to 30h,
- then, possibly deformed and final-dried at approx. 160°C;
- if required, burned in a furnace for 5 to 15h or in situ at a temperature between 800°C and 1600 °C.

9. Method according to claim 8 **characterised in that** sodiumhydrooxyd, potassiumhydrooxid , soda or potash is used as first material.

10. Method according to claim 8 or 9, **characterised in that** aluminiumtrihydrooxide, called gibbsite, and/or boehmite, aluminiumoxidhydrooxid is used as second material.

11. Method according to one of claims 8 to 10, **characterised in that** a stabilising means in a concentration between 0,3 and 1,5 % and/or a reinforcing and filtration means in a concentration between 1 and 8% is given to that mixture.

12. Method according to claim 11, **characterised in that** the stabilising means is a methyl cellulose and the reinforcing and filtration means is cellulose.

13. Method according to one of claims 8 to 12, **characterised in that** the mixture of sodiumoxide Na₂O, that is contained in both materials, is in an arithmetic ratio to aluminiumoxid, Al₂O₃, approx. 1:4,2.

## Revendications

1. Matériau d'isolation thermique constitué d'aluminates poreux qui résistent à des températures supérieures à 1 000°C,
**caractérisé en ce que** il est constitué de bêta-aluminate de métal alcalin et/ou d'un de ses précurseurs autoclavé de manière à résister à l'évaporation et à la fusion du métal alcalin, sa densité en vrac étant comprise entre 0,3 et 1,30 g/cm³, sa conductivité thermique étant comprise entre 0,2 et 0,9 W/(mK) et ses pores ayant une taille comprise dans la plage de 0,1 à 1,0 µm.

2. Matériau d'isolation thermique selon la revendication 1, **caractérisé en ce que** les précurseurs sont constitués d'aluminates de métal alcalin.

3. Matériau d'isolation thermique selon la revendication 2, **caractérisé en ce que** les aluminates de métal alcalin sont constitués de böhmite, d'α-aluminate, de β-aluminate, de γ-aluminate, de η-aluminate, de thodite et/ou de spinelles de sodium ou de potassium.

4. Matériau d'isolation thermique selon la revendication 3, **caractérisé en ce que** les précurseurs contiennent des oxydes, des hydroxydes ou des sels de métal alcalin d'un acide volatil à des températures inférieures à 1 000°C et/ou d'un sel d'aluminium d'un acide volatil à des températures inférieures à 1 000°C et/ou de m-Al₂O₃ et/ou de NaAlO₂.

5. Matériau d'isolation thermique selon la revendication 4, **caractérisé en ce que** l'acide volatil est l'acide carbonique, l'acide nitrique, l'acide salicylique, l'acide formique, l'acide acétique ou un autre acide carboxylique.

6. Matériau d'isolation thermique selon l'une des revendications précédentes, **caractérisé en ce que** sa résistance mécanique est > 3 N/mm².

7. Utilisation du matériau d'isolation thermique à l'aluminate selon l'une des revendications 1 à 6 sous la forme d'une plaque, d'un bloc composite, d'un tube, d'un segment de tube ou d'un anneau.

8. Procédé de fabrication du matériau d'isolation thermique selon l'une des revendications 1 à 6 ou d'une pièce façonnée selon la revendication 7, **caractérisé en ce que**
- tout d'abord, on met en suspension un mélange aqueux homogène constitué d'au moins une première substance qui libère des ions de métal alcalin et d'au moins une deuxième substance qui libère des ions aluminium, sensiblement avec la même quantité d'eau, les deux substances étant telles qu'à une température inférieure à 1 000°C, elles libèrent l'oxyde de métal alcalin concerné ou l'oxyde d'aluminium avec sublimation des autres composants, le rapport calculé de l'oxyde de métal alcalin et de l'oxyde d'aluminium incorporés dans le mélange étant sensiblement le double de celui du β-aluminate de métal alcalin,
- ensuite, ce mélange homogène est autoclavé en suspension à environ 200°C pendant 5 à 30 h dans un moule ou comme plaque ou ébauche comprimée, ou encore ce mélange est autoclavé directement en suspension, subit son façonnage et est éventuellement autoclavé à nouveau,
- on présèche à environ 160°C pendant 10 à 30 h,
- ensuite on démoule éventuellement et on réalise le séchage final à environ 160°C et
- éventuellement, on calcine à une température comprise entre 800°C et 1 600°C pendant 5 à 15 h dans un four de calcination, ou in situ.

9. Procédé selon la revendication 8, **caractérisé en ce que** comme première substance, on utilise de l'hydroxyde de sodium, de l'hydroxyde de potassium, de la soude ou de la potasse.

10. Procédé selon les revendications 8 ou 9, **caractérisé en ce que** comme deuxième substance, on utilise du trihydroxyde d'aluminium, appelé gibbsite, et/ou de la böhmite, à savoir l'oxy-hydroxyde d'aluminium.

11. Procédé selon l'une des revendications 8 à 10, **caractérisé en ce que** l'on ajoute au mélange un agent de stabilisation à une concentration comprise entre 0,3 et 1,5 % et/ou un auxiliaire d'armature et de filtration à une concentration comprise entre 1 % et 8 %.

12. Procédé selon la revendication 11, **caractérisé en ce que** l'agent de stabilisation est une méthylcellulose et **en ce que** l'auxiliaire d'armature et de filtration est une cellulose.

13. Procédé selon l'une des revendications 8 à 12, **caractérisé en ce que** le mélange présente un rapport calculé entre l'oxyde d'aluminium Na₂0 et l'oxyde d'aluminium Al₂O₃ que contiennent les deux substances d'environ 1:4,2.
